(19) Europäisches Patentamt

European Patent Office

Office européen des brevets

(11) **EP 1 622 430 A2**

(12) **EUROPÄISCHE PATENTANMELDUNG**

(43) Veröffentlichungstag:
 **01.02.2006 Patentblatt 2006/05**

(51) Int Cl.:
 *H05B 39/04* (2006.01)

(21) Anmeldenummer: 05104688.6

(22) Anmeldetag: **31.05.2005**

(84) Benannte Vertragsstaaten:
 **AT BE BG CH CY CZ DE DK EE ES FI FR GB GR HU IE IS IT LI LT LU MC NL PL PT RO SE SI SK TR**
 Benannte Erstreckungsstaaten:
 **AL BA HR LV MK YU**

(30) Priorität: **28.07.2004 DE 102004036563**

(71) Anmelder: **ROBERT BOSCH GMBH**
 **70442 Stuttgart (DE)**

(72) Erfinder:
 • **Wolf, Michael**
  **70806, Kornwestheim (DE)**
 • **Beck, Markus**
  **71711, Steinheim (DE)**

(54) **Vorrichtung zur Spannungsstabilisierung**

(57)  Es werden Vorrichtungen zur Spannungsstabilisierung beschrieben, bei denen ein Spannungswandler eingangsseitig mit einer Batterie sowie Hochstromverbrauchern und ausgangsseitig mit spannungskritischen Verbrauchern in Verbindung steht und mit der Bordnetzspannung versorgt wird. Der Spannungswandler ist in einem ersten Ausführungsbeispiel so ausgestaltet, dass er ausgangsseitig nur dann eine zusätzliche Wandler- spannung liefert, wenn an seinem Eingang eine Spannung anliegt, die kleiner ist als eine vorgebbare Spannung. Zusätzlich wird die Spannung für die apannungskritischen bzw. spannungssensitiven Verbraucher noch mittels eines PWM-Reglers stabilisiert. In einem zweiten Ausführungsbeispiel entfällt der PWM-Regler und der Spannungswandler ist als kombinierter Hoch- und Tiefsetzsteller ausgestaltet.

**Fig. 1**

EP 1 622 430 A2

**Beschreibung**

Stand der Technik

Die Erfindung betrifft eine Vorrichtung zur Spannungsstabilisierung, die insbesondere im Zusammenhang mit der Spannungsversorgung für elektrische Verbraucher in einem Kraftfahrzeugbordnetz eingesetzt wird.

Beim Zu- und Abschalten von elektrischen Hochstrom-Verbrauchern entstehen Spannungsschwankungen, die für spannungskritische Verbraucher problematisch sein können. Beispielsweise entstehen solche Spannungsschwankungen in Kraftfahrzeugbordnetzen, wenn ein Hochstromverbraucher, wie beispielsweise der Starter oder eine elektrische Heizung eingeschaltet wird. Besonders problematisch sind zyklisch aktive Hochstromverbraucher wie elektrische Bremssysteme oder elektrische Zusatzverdichter, die jeweils beim Schalten Spannungsschwankungen verursachen. Diese Spannungsschwankungen können dann zu einem deutlich sichtbaren Lichtflackern führen, sofern keine Gegenmaßnahmen getroffen werden.

In modernen Fahrzeugen werden daher Glühlampen pulsweitenmoduliert angesteuert, so dass sich für diese spannungskritischen Verbraucher eine weitgehend konstante und stabile Effektivspannung einstellt, die unterhalb der typischen Generatorspannung von 13,5 bis 14,8 V liegt.

Zur Verlängerung der Glühlampenlebensdauer wird die an der Glühlampe anliegende Glühlampenspannung dabei ohne Pulsweitenmodulation typischerweise auf 12, 8 bis 13,2 V eingestellt. Wird das Pulsweitenmodulationsverfahren zur Vermeidung von Lichtflackern eingesetzt, kann die Effektivspannung auch noch auf deutlich kleinere Spannungswerte eingestellt werden, wobei dann allerdings eine geringere Lichtstärke akzeptiert werden muss. Bei Schaltvorgängen, also bei Zu- oder Abschaltung von Hochstromverbrauchern können Spannungsschwankungen durch Veränderung des Pulsweitenmodulationsverhältnisses ausgeregelt werden und zumindest sicher gestellt werden, dass kein Lichtflackern auftritt.

Bei anderer Lichttechnik, beispielsweise bei Fahrzeugen mit LED-Lichttechnik wird bisher über einen Vorwiderstand (spannungsinstabil) bzw. über einen linear betriebenen Festspannungsregler (spannungsstabil) die Spannung beeinflusst. Eine Versorgung der Lichttechnik wäre auch direkt über einen DC/DC-Wandler möglich, dies würde aber zu beträchtlichen Kosten führen, da ein geeigneter Gleichspannungswandler für die gesamte Spannung einzusetzen wäre.

Eine Vorrichtung, die sich mit der Problematik der Spannungsregelung für die Versorgung von Glühlampen oder lichtemittieren den Dioden (LED-Lichttechnik) beschäftigt, ist aus der EP 04 92 153 B1 bekannt. Bei dieser bekannten Vorrichtung wird ein pulsweitenmodulierter Spannungswandler eingesetzt, der zwischen einem Versorgungsanschluss mit Bordnetzspannung und dem Spannungsanschluss für die Glühlampen liegt. Durch eine geeignete Ansteuerung des Spannungswandlers, insbesondere mit einer Taktfrequenz, die mindesten 80 Hz beträgt, kann die Funktionsfähigkeit der Lampen ohne Lichtflackern sichergestellt werden.

Vorteile der Erfindung

Die erfindungsgemäße Vorrichtung zur Spannungsstabilisierung mit den Merkmalen des Anspruchs 1 hat den Vorteil, dass eine zuverlässige Spannungsversorgung für spannungskritische Verbraucher sichergestellt werden kann, die besonders aufwandsarm und kostengünstig ist, da sie keinen Spannungswandler benötigt, der die gesamte Versorgungsspannung regelt. Vielmehr wird mit Hilfe eines seriell geschalteten Spannungswandlers eine Zusatzspannung erzeugt, die der Bordnetzspannung durch Zuführung zum spannungskritischen Verbraucher überlagert werden kann. Beim Betreiben von Lampen in der Lichttechnik können damit zusätzliche Spannungsreserven, die beim Zuschalten von Hochstromverbrauchern ausgenützt werden können, eingesetzt werden. Der Betrieb von Hochstromverbrauchern in einem Bordnetz mit einer einzigen Batterie wird somit ermöglicht unter Erfüllung der Anforderungen an Lichtstärke und Leistungsverfügbarkeit der Hochstromkomponente, beispielsweise des Starters oder von elektrischen Heizungen. Die erforderliche elektrische Leistung für den spannungskritischen Verbraucher, insbesondere für Lampen, wird dabei in vorteilhafter Weise mit Hilfe des seriell geschalteten Spannungswandlers so erzeugt, dass nur ein Bruchteil, beispielsweise etwa ein Sechstel der Leistung eines Spannungswandlers, der die Lichttechnik direkt versorgt, benötigt wird. Damit kann in vorteilhafter Weise eine preisgünstige Spannungsversorgung realisiert werden, die deutlich kostengünstiger ist als die Lösung mit einem Spannungswandler, der die gesamte Versorgung übernehmen müsste.

Weitere Vorteile der Erfindung ergeben sich durch die in den Unteransprüchen angegebenen Maßnahmen, die auch den besonders vorteilhaften Einsatz der Erfindung in einem Fahrzeug zur Versorgung spannungskritischer Verbraucher, insbesondere Glühlampen störungsfrei ermöglichen.

Ein weiterer besonderer Vorteil der Erfmdung besteht darin, dass die Effektivspannung an den spannungskritischen Verbrauchern in möglichst weiten Spannungsgrenzen ausgeregelt werden kann, ohne dass deren Funktionsfähigkeit beeinträchtigt wird. Je tiefer diese Effektivspannung ausgeregelt werden kann, desto mehr Leistung steht den Hochstromverbrauchern zur Verfügung bevor die Spannungsschwankungen einen unzulässigen Bereich erreichen und beispielsweise ein Lampenflackern auslösen. Damit können mit der erfindungsgemäßen Lösung alle derzeit einzusetzenden Hochstromverbraucher ohne Beeinträchtigung des übrigen Bordnetzes eingesetzt werden.

Zeichnung

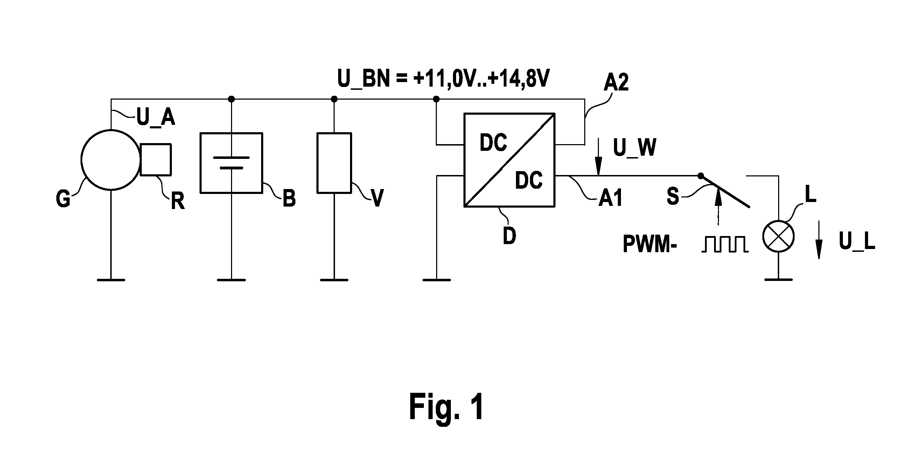

Ein Ausführungsbeispiel der Erfindung ist in der Figur 1 der Zeichnung dargestellt und wird in der nachfolgenden Beschreibung näher erläutert.

Beschreibung

Bei zyklisch aktiven Hochstromverbrauchern sind im preisgünstigen Einbatterienbordnetz Maßnahmen zur Vermeidung von Lichtflackern erforderlich. Je tiefer die Effektivspannung an den Glühlampen eingestellt wird, umso mehr Leistung steht einem Hochstromverbraucher zur Verfügung, bevor die Spannungsschwankungen an den Lampen so groß werden, dass sie in den sichtbaren Bereich reichen. Im Gegenzug dazu steht nur noch eine deutlich verminderte Lichtstärke zur Verfügung. In derzeit eingesetzten Systemen der Lichttechnik wird eine pulsweitenmodulierte Glühlampen-Effektivspannung erzeugt, die einen akzeptablen Kompromiss darstellt. Dabei sind die Anforderungen an die pulsweitenmodulierte Glühlampen-Effektivspannung so, dass diese Effektivspannung im Bereich von 12,8 V bis 13,2 V liegt, bei üblichen Generatorspannungen im Bereich von 13,5 bis 14,8 V.

Bei speziellen Hochstromverbrauchern, wie beispielsweise elektromotorische Antrieben oder elektrische Zusatzverdichtern EZV können bei bestimmten Betriebsfällen Probleme auftreten, die zusätzliche Maßnahmen erfordern, damit kein Leistungseinbußen auftreten. Mit den in der Figur 1 dargestellten Maßnahmen wird ein Betrieb der Hochstromverbraucher ohne Leistungseinbußen der Hochstromkomponente bei Erfüllung der Lichttechnikanforderungen bzw. der Anforderungen anderer spannungskritischer Verbraucher möglich. Im Folgenden steht die Lichttechnik jeweils stellvertretend für spannungskritische Verbraucher.

In der Figur 1 sind die erfindungswesentlichen Komponenten eines Fahrzeugbordnetzes dargestellt. Dabei ist ein Generator G mit zugeordnetem Spannungsregler R vorhanden, wobei der Generator G vom Fahrzeugmotor über geeignete, nicht dargestellte Mittel angetrieben wird und eine durch den Spannungsregler R geregelte Ausgangsspannung U_A abgibt. Diese geregelte Ausgangsspannung U_A beträgt 13,5 bis 14,8 V und führt infolge der Belastung durch die Bordnetzverbraucher zu einer Bordnetzspannung U_BN von etwa 11 bis 14,8 Volt.

Dem Generator zugeordnet ist eine Batterie B sowie elektrische Bordnetzverbraucher V, insbesondere Hochstromverbraucher wie elektrische Bremssyteme, eine elektrischer Zusatzverdichter oder ein Starter. Der Generator G, die Batterie B sowie die Hochstromverbraucher V sind über einen Gleichspannungswandler (DC/DC-Wandler) D mit spannungskritischen Verbrauchern verbunden, beispielsweise mit einer Glühlampe L.

Der Gleichspannungswandler D liegt eingangsseitig zwischen der Bordnetzspannung U_BN und Masse. Ausgangsseitig weist der Gleichspannungswandler einen ersten Ausgang A1 auf, der mit der Lampe L über einen Schalter S verbindbar ist. Der Schalter S wird pulsweitenmoduliert angesteuert, wobei die Ansteuersignale von einem Gleichspannungswandler mit einem PWM Regler PR geliefert werden, der Bestandteil der Regelung der Lichttechnik ist. Die geregelte Spannung U_L, die die Klemmenspannung an der Glühlampe (Sollspannung) darstellt wird aus der vom Gleichspannungswandler (DC/DC-Wandler) D am Ausgang A1 gelieferten Spannung mittels Pulsweitenregelung erzeugt. Durch die so erzielte pulsweitenmodulierte Regelung kann die Klemmenspannung U_L an der Glühlampe G auf einen vorgebbaren Wert eingestellt werden. Dies ist erforderlich, da an einem spannungssensitiven Verbraucher stets eine konstante und stabile Sollspannung anliegen soll. Typische Werte für die Sollspannung sind 12,8 bis 13,2 Volt.

An einem zweiten Ausgang A2 des Gleichspannungswandlers (DC/DC-Wandler) D, der mit dem Eingang des Gleichspannungswandlers (DC/DC-Wandler) D und mit der Batterie in Verbindung steht, liegt die Bordnetzspannung U_BN, die je nach Betriebsbedingung zwischen +11,0 V und +14,8V schwankt.

Erfindungsgemäß soll über den zum PWM-Regler der Lichttechnik seriell geschalteten Spannungswandler (DC/DC-Wandler) D, der aus dem Hauptbordnetz versorgt wird, eine Zusatzspannung U_W in der Größenordnung von bis zu 2 Volt erzeugt werden. Die Lichttechnik bzw. allgemein ein spannungssensitiver Verbraucher hat damit zusätzliche Spannungsreserven, die beim Zuschalten eines Hochstromverbrauchers ausgenutzt werden können und verhindern, dass das Zuschalten des Hochstromverbrauchers zu Beeinträchtigungen bei der Spannungsversorgung für den spannungssensitiven Verbraucher führen und beispielsweise Lampenflackern verhindern. Für die optimale Versorgung des spannungssensitiven Verbrauchers soll stets eine konstante und stabile Soll-Spannung U_S anliegen, für die Versorgung einer Lampe L gilt dann:

$$U\_L = U\_S = 12,8V \ldots 13,2V.$$

Für das Erreichen einer Konstanten und stabilen Soll-Spannung sind zwei Ausführungsbeispiele der Erfindung einsetzbar. In einem ersten Ausführungsbeispiel wird ein Gleichspannungswandlers (DC/DC-Wandler) D eingesetzt, der eine Tiefsetzstellerfunktion aufweist, die vorzugsweise in Verbindung mit der pulsweitenmodulierten Ansteuerung der Lichttechnik zusammenarbeitet. Für die verschiedenen Betriebsfälle gilt:

Betriebsfall a:

In diesem Betriebsfall ist die Bordnetzspannung U_BN größer oder gleich der Lampensollspannung U_S. Es ist also kein Hochstromverbraucher eingeschaltet und die zur Verfügung stehende Spannung ist ausreichend hoch. In diesem Fall beträgt die Ausgangsspannung des Spannungswandlers U_W = 0 Volt. Die Spannung U_L an der Lampe L wird durch das Pulsweitenmodulationsverhältnis auf die Sollspannung U_S eingestellt. Der Spannungswandler liefert also keine eigene Ausgangsspannung.

Betriebsfall b:

Wenn die Bordnetzspannung U_BN kleiner ist als die Lampensollspannung U_S, beispielsweise nach dem Einschalten eines Hochstromverbrauchers oder gegebenenfalls auch bei aus anderen Gründen zu geringer Bordnetzspannung, wird der Spannungswandler D aktiv und liefert die Wandlerspannung U_W, die seiner Nennspannung entspricht und beispielsweise U_W_nenn = 2 Volt beträgt. Diese Spannung liegt dann zwischen des Ausgängen A1 und A2 des Spannungswandlers D und erhöht das Potential an A1 um 2 Volt. Die Spannung, die in diesem Fall an der Lampe L liegt, ergibt sich aus der kurzzeitig eingebrochenen Bordnetzspannung von beispielsweise 11,x Volt und der Überlagerung mit der Wandlerspannung U_W = 2 Volt und wird wiederum durch das Pulsweitenmodulationsverhältnis auf U_L_soll eingestellt. Die eingebrochene Bordnetzspannung wird also im kritischen Fall um 2 Volt erhöht und damit wird die Spannungsversorgung für die Lampe L wesentlich verbessert.

In einer weiteren Ausgestaltung der Erfindung kann auf den Spannungswandler mit pulsweitenmodulierter Spannungsregelung verzichtet werden, wenn der Spannungswandler DC/DC-Wandler so aufgebaut ist, dass er eine Hoch- und eine Tiefsetzstellerfunktion aufweist, also in der Lage ist, die Ausgangsspannung gegenüber der Eingangsspannung alternativ zu erhöhen oder zu verringern. Beispielsweise arbeitet der Spannungswandler als Hochsetzsteller, wenn die Eingangsspannung unter einem ersten vorgebbaren Grenzwert liegt und als Tiefsetzsteller, wenn die Eingangsspannung über einem zweiten vorgebbaren Grenzwert liegt. Im dazwischenliegenden Spannungsbereich kann gegebenenfalls die Ausgangsspannung gleich der Eingangsspannung sein. Der Aufbau dieses Ausführungsbeispiels entspricht dann dem in der Figur dargestellten Aufbau ohne PWM-Funktionsglied bzw. PWM-Regler.

Die Regelung der Ausgangsspannung U_W des Gleichspannungswandlers erfolgt dann so, dass sich additiv für die Lampenspannung U_L wieder eine konstante stabile Spannung ergibt, die sich wie folgt darstellen lässt:

$$U\_L = U\_BN + U\_W,$$

wobei die zwischen den Ausgängen A1 und A2 des Spannungswandlers anstehende Wandlerspannung U_W im Bereich von -2,0 Volt bis + 2,0 Volt liegen sollte. Wird diese Spannung der Bordnetzspannung U-BN überlagert, kann die konstante Ausgangsspannung als Versorgungsspannung für den spannungssensitiven Verbraucher erhalten werden. Bei eingebrochener Bordnetzspannung von beispielsweise 11,x Volt ergibt sich wiederum eine Versorgungsspannung von 11,x Volt + 2 Volt. Bei einer hohen Bordnetzspannung von maximal 14.8 Volt ergibt sich eine Versorgungsspannung von 14,8 Volt - 2,0 Volt = 12, 8 Volt.

Mit den erfindungsgemäßen Ausführungsbeispielen ist es möglich, die erforderliche elektrische Leistung für die Lampenversorgung so bereitzustellen, dass im 12 bzw. 14 Volt Bordnetz nur etwa ein fünftel der Leistung eines Spannungswandlers benötigt wird, der die Lampen direkt versorgen würde.

Ein erfindungsgemäßer Spannungswandler kann zur Versorgung beliebiger spannungskritischer Verbraucher eingesetzt werden. Er kann zweckmäßiger Weise beim Einsatz in einem Fahrzeug in einem ohnehin vorhandenen Body-Computer oder einem Signalleistungsverteiler untergebracht werden und stellt sicher, dass in Bordnetzen mit zyklisch aktiven Hochstromverbrauchern wie elektrischen Bremssystemen oder elektrischen Zusatzverdichtern die gegebenenfalls auftretenden Spannungseinbrüche nicht zu einer Beeinträchtigung der Spannungsversorgung für die spannungskritischen Verbraucher führt.

**Patentansprüche**

1. Vorrichtung zur Spannungsstabilisierung mit einem Spannungswandler, dem eingangsseitig eine Eingangsspannung U_BN zugeführt wird und der ausgangsseitig eine Spannung liefert, die vorgebbaren Verbrauchern zuführbar ist, **dadurch gekennzeichnet, dass** der Spannungswandler so aufgebaut ist, dass an seinem Ausgang eine Ausgangsspannung U_W entsteht, sofern die Eingangsspannung eine vorgebbaren Wert unterschreitet.

2. Vorrichtung zur Spannungswandlung nach Anspruch 1, **dadurch gekennzeichnet, dass** der Spannungswandler ein Gleichspannungswandler ist, der in einem Fahrzeugbordnetz eingesetzt wird und eingangsseitig mit der Batterie und wenigstens einem Hochstromverbraucher in Verbindung steht und ausgangsseitig mit spannungskritischen bzw. spannungssensitiven Verbrauchern.

3. Vorrichtung zur Spannungswandlung nach einem der vorhergehenden Ansprüche, **dadurch gekennzeichnet, dass** die spannungskritischen bzw. spannungssensitiven Verbraucher Lampen sind.

4. Vorrichtung zur Spannungswandlung nach einem der vorhergehenden Ansprüche, **dadurch gekennzeichnet, dass** die Hochstromverbraucher mit der Batterie und/oder dem Generator sowie mit dem Eingang des Spannungswandlers in Verbindung stehen und nur zeitweilig eingeschaltet werden und beim Einschalten zu einem Einbruch der Bordnetzspannung U_BN führen.

5. Vorrichtung zur Spannungswandlung nach einem der vorhergehenden Ansprüche, **dadurch gekennzeichnet, dass** ein Eingang des Gleichspannungswandlers und ein Ausgang des Gleichspannungswandlers auf demselben Potential liegen.

6. Vorrichtung zur Spannungswandlung nach einem der vorhergehenden Ansprüche, **dadurch gekennzeichnet, dass** zwischen dem Ausgang des Spannungswandlers und den spannungskritischen bzw. spannungssensitiven Verbrauchern ein zusätzlicher PWM Regler liegt, der mittels pulsweitenmodulierte Ansteuerung eines Schalters die Versorgungsspannung für die spannungskritischen bzw. spannungssensitiven Verbraucher stabilisiert.

7. Vorrichtung zur Spannungswandlung nach einem der vorhergehenden Ansprüche 1 bis 5, **dadurch gekennzeichnet, dass** der Spannungswandler als Hoch- und als Tiefsetzsteller wirken kann und seine Ausgangsspannung gegenüber der Eingangsspannung erhöht, wenn die Eingangsspannung kleiner ist als ein erster Wert und verringert, wenn die Eingangsspannung höher ist als ein zweiter Wert.

8. Vorrichtung zur Spannungswandlung nach einem der vorhergehenden Ansprüche 1 bis 5, **dadurch gekennzeichnet, dass** sie Bestandteil eines Steuergeräts oder eines Body-Computers oder eines Signal-Leistungs-Verteilers in einem Fahrzeugbordnetz ist.

**Fig. 1**

U_BN = +11,0V..+14,8V

U_A

U_W

U_L

A2

A1

S

PWM-

DC / DC

D

L

V

B

R

G